# EUROPEAN PATENT APPLICATION

(11) **EP 4 159 372 A1**
(43) Date of publication of application: **05.04.2023**
(21) Application number: 22199003.9
(22) Date of filing: 30.09.2022
(51) Int. Cl.: B24D 15/04, B24D 15/02, B23D 71/04

(54) **SHEET METAL FILE**

(30) Priority: 01.10.2021 JP 2021163001
(71) Applicant: Mipox Corporation, Oizumi-cho, Hokuto-shi, Yamanashi 409-1501 (JP)
(72) Inventor: HAYASHI, Mitsuhiko, Kure-shi, Hiroshima 737-0154 (JP)
(74) Representative: Viering, Jentschura & Partner mbB Patent- und Rechtsanwälte

(57) **Abstract**

A sheet metal file (1) includes a main body (3) composed of a sheet metal member that is flexible, and cutting edges (4) raised by setting on a surface, on a first side, of the main body. The sheet metal file is allowed to smooth an object to be smoothed. The main body (3) is an elastic member. The cutting edges (4) are formed so that a driving depth with respect to the main body (3) is in a range of 20 to 40% of a thickness of the main body (3). The sheet metal file is allowed to smooth an object to be smoothed with the surface (3a) of the main body (3) on which the cutting edges (4) are raised facing a curved surface of the object to be smoothed and with the main body (3) bent along the curved surface.

## Description

### BACKGROUND

The present disclosure relates to a file for smoothing a workpiece (an object to be smoothed).

A metal file is used as a tool for cutting a workpiece and forming its shape to fit its dimensions, and removing rust from small parts in general. A general metal file has cutting edges raised on the surface of a metal body in the form of a rod (or bar), and is designed to smooth the workpiece while the surface on which the cutting edges are raised is being pressed against the workpiece. The metal file is formed by driving a chisel into the metal body one by one (hereinafter referred to as "setting") and therefore has high durability and high cutting ability.

On the other hand, a general metal file in the form of a rod, formed by setting has high durability and high cutting ability. It is however difficult to smooth an object to be smoothed when it includes a curved surface, which thereby requires skillful technique. Sandpaper, which is a sheet of paper coated with abrasives, has therefore been used for smoothing such a curved surface. Sandpaper is made by adhering abrasives to the surface of paper such as thick paper or oil paper, and used for smoothing a workpiece by rubbing the surface covered with the abrasives against the workpiece.

Sandpaper is easy to smooth curved surfaces and the like. Sandpaper however has issues of lower cutting ability than that of the metal file formed by setting, and frequent occurrence of clogging, tearing, and reduction in the cutting ability due to the low durability.

In a manual sharpening tool of Patent Literature 1 (JPH06278044 (A)), a thin plate coated with abrasives is magnetically held by a handle so that a grinding portion is easily replaceable and reversible.

The thin files, in which abrasives are adhered to a base material such as paper or a metal plate, are provided as described above, but any of the files have low cutting ability and low durability.

The present disclosure provides a sheet metal file that has high cutting ability and excellent durability, and can be easy to smooth surfaces of various shapes including curved surfaces.

### SUMMARY

A sheet metal file according to a first embodiment of the present disclosure, comprises a main body composed of a sheet metal member that is flexible, and cutting edges raised by setting on a surface, on a first side, of the main body. The sheet metal file is allowed to smooth an object to be smoothed. The main body is an elastic member. The cutting edges are formed so that a driving depth with respect to the main body is in a range of 20 to 40% of a thickness of the main body. The sheet metal file is allowed to smooth the object to be smoothed with the surface of the main body on which the cutting edges are raised facing a curved surface of the object to be smoothed and with the main body bent along the curved surface.

In this sheet metal file, the cutting edges for smoothing the object to be smoothed are formed by setting on the sheet metal member that is flexible. Therefore, the sheet metal file can be easy to smooth the curved surface of the object to be smoothed including the curved surface, and it is possible to provide a sheet metal file that has high cutting ability and high durability. In addition, since the cutting edges are formed by setting on a surface of the sheet metal member, the flexibility of the main body can be improved and the curved surface can be easily smoothed. Further, since the driving depth of the cutting edges is in the range of 20 to 40% of the thickness of the main body, the flexibility and elasticity of the sheet metal file can be maintained, and the cutting ability and durability can be maintained.

In a sheet metal file according to a second embodiment of the present disclosure, a surface, on a second side, of the main body in sheet metal file according to the first embodiment serves as a holding section that is allowed to be held in a hand when smoothing the object to be smoothed. No cutting edges are formed on the surface, on the second side, of the main body.

In this sheet metal file, the cutting edges as a smoothing section are formed by setting on the surface, on the first side, of the main body. On the other hand, the holding section when smoothing the object to be smoothed is provided on the surface on the second side on which cutting edges as a smoothing section are not formed. A smooth finish is therefore possible by smoothing the object to be smoothed while bending the surface on which the cutting edges are raised along the curved surface of the object to be smoothed, specifically by smoothing the object to be smoothed while applying a force from the surface on the second side with the surface of the sheet metal file on which the cutting edges are raised facing the curved surface of the object to be smoothed. Since no smoothing section is formed in the surface on the second side (the surface that serves as the holding section), it is possible to prevent injuries during the smoothing operation as much as possible.

In a sheet metal file according to a third embodiment of the present disclosure, a surface, on a second side, of the main body in the sheet metal file according to the first embodiment serves as an attachment section on which no cutting edges are formed. The attachment section allows a holding section, which is allowed to be held in a hand when smoothing the object to be smoothed, to be attached to. Alternatively, the attachment section allows members, of a smoothing tool to be employed when smoothing the object to be smoothed, to be attached to.

In this sheet metal file, the cutting edges as a smoothing section are formed by setting on the surface, on the first side, of the main body. No cutting edges as a smoothing section are formed on the surface on the second side, and the surface on the second side serves as the attachment section that allows the holding section or the members to be attached to. As a result, a force during the smoothing operation can be efficiently transmitted to the object to be smoothed including a curved surface, and the object can be smoothed through smooth operation.

### BRIEF DESCRIPTION OF THE DRAWINGS

FIG. 1A is a plan view illustrating a sheet metal file according to an embodiment of the present disclosure.
FIG. 1B is a front view illustrating the sheet metal file according to the embodiment of the present disclosure.
FIG. 1C is a bottom view illustrating the sheet metal file according to the embodiment of the present disclosure.
FIG. 2A is a plan view illustrating a sheet metal file according to the embodiment of the present disclosure.
FIG. 2B is a front view illustrating the sheet metal file according to the embodiment of the present disclosure.
FIG. 2C is a bottom view illustrating the sheet metal file according to the embodiment of the present disclosure.
FIG. 3A is an explanatory diagram of lower cutting edges 1.
FIG. 3B is an explanatory diagram of lower cutting edges 2.
FIG. 4A is an explanatory diagram of upper cutting edges.
FIG. 4B is a diagram illustrating a driving angle in setting.
FIG. 5A is an enlarged view of part A in FIG. 2A.
FIG. 5B is an enlarged view of part B in FIG. 5A.
FIG. 6A is a diagram illustrating the sheet metal file according to the present embodiment in a mode before the smoothing operation.
FIG. 6B is a diagram illustrating the sheet metal file according to the present embodiment in a mode in which the sheet metal file smooths a concave surface of an object to be smoothed.
FIG. 6C is a diagram illustrating the sheet metal file according to the present embodiment in a mode in which the sheet metal file smooths a convex surface of an object to be smoothed.
FIG. 7A is a diagram illustrating a sheet metal file according to a second aspect in a mode before the smoothing operation.
FIG. 7B is a diagram illustrating the sheet metal file according to the second aspect in a mode in which the sheet metal file smooths a concave surface of an object to be smoothed.
FIG. 7C is a diagram illustrating the sheet metal file according to the second aspect in a mode in which the sheet metal file smooths a convex surface of an object to be smoothed.

### DETAILED DESCRIPTION

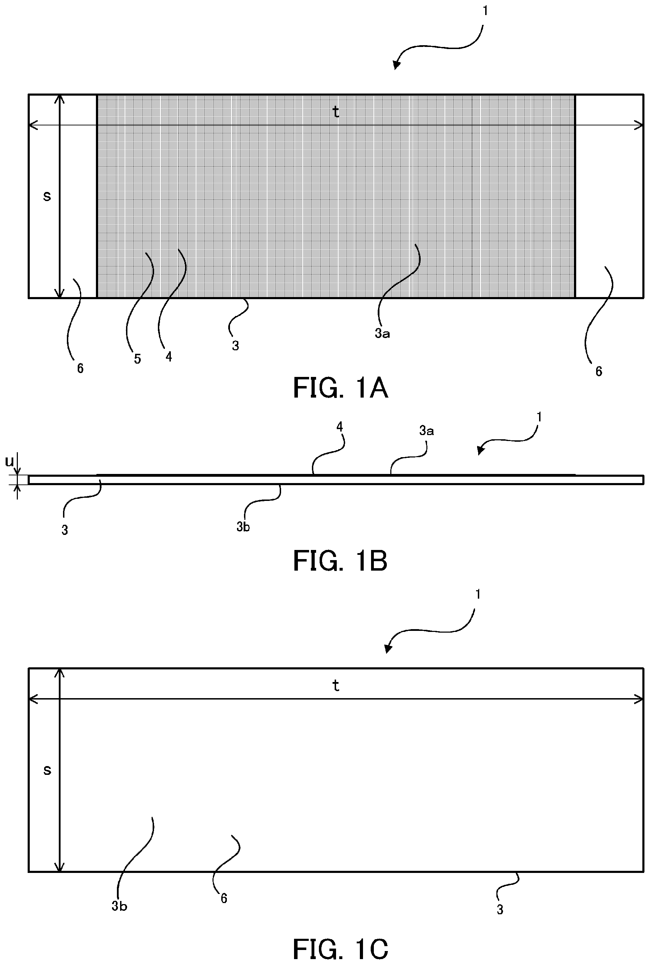

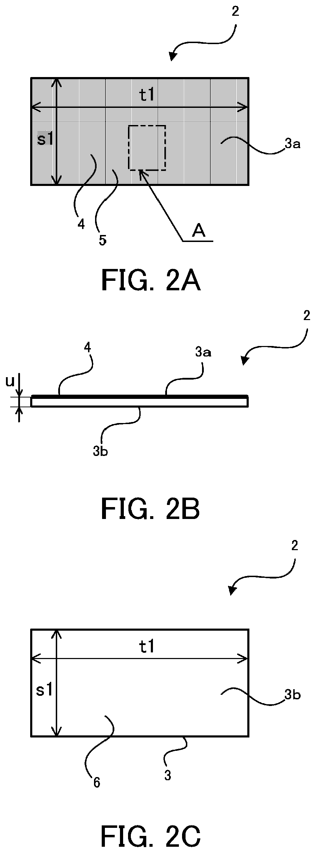

A sheet metal file according to an embodiment of the present disclosure will now be described with reference to FIGS. 1A to 7C. As illustrated in FIGS. 1A to 1C, a sheet metal file 1 according to the present embodiment is constituted by forming cutting edges 4 as a smoothing section by setting on a main body 3 composed of a relatively large sheet metal member. As illustrated in FIGS. 2A to 2C, a thin plate file 2 is cut out of the large sheet metal file 1 to have a desired size and shape according to the smoothing application, the smoothing location, the attached destination of the thin plate file itself, and the like.

A metal member of the main body 3 is a flexible metal member so that the thin plate file 2 can be easy to smooth a flat or curved surface that is a surface to be smoothed of a workpiece (an object to be smoothed). The metal member of the main body 3 is also an elastic member. However, the metal member of the main body 3 is not particularly limited as long as it is a flexible and elastic member. For example, a metal member such as stainless steel or iron can be employed.

The sheet metal file 1 is composed of a stainless steel plate in the present embodiment. As illustrated in FIGS. 1A to 1C, the size of the main body 3 is s mm (100 mm) in length ×t mm (300 mm) in width × u mm (0.5 mm) in thickness. The stainless steel plate is an elastic member that is flexible.

FIG. 1A is a plan view illustrating the sheet metal file 1 according to the present embodiment. The cutting edges 4 (4a, 4b, 4c) as the smoothing section for smoothing the workpiece are raised by setting on a setting region 5 of a surface, on a first side, of the main body illustrated in FIG. 1A. Hereinafter, the surface on the first side is also referred to as a "setting surface 3a". Further, in the present embodiment, left and right regions (each size is 100 mm in length × 30 mm in width) of the setting surface 3a are non-setting regions 6 on which no cutting edges 4 are formed by setting. A central region of the setting surface 3a (100 mm in length × 240 mm in width) is the setting region 5 on which the cutting edges 4 are raised by setting.

FIG. 1B is a front view illustrating the sheet metal file 1 according to the present embodiment. The setting surface 3a on which the cutting edges 4 are raised by setting is on the upper side of the sheet surface in FIG. 1B. A back surface 3b on which no cutting edges are formed is on the lower side of the sheet surface.
FIG. 1C is a bottom view illustrating the sheet metal file 1 according to the present embodiment. A surface illustrated in FIG. 1C is a surface opposite the surface illustrated in FIG. 1A, and is a surface, on a second side, of the main body 3.

As illustrated in FIG. 1C, the back surface 3b of the main body is a non-setting region 6 on which no cutting edges are formed by setting. The back surface 3b of the main body 3 of the sheet metal file 2 (sheet metal file 1) according to the present embodiment serves as a holding section or an attachment section, on which no cutting edges are formed. The holding section allows a worker to hold and use the sheet metal file 2 in the worker's hand. The attachment section allows the sheet metal file 2 to be attached to members of a smoothing tool (manual tool, automatic tool or tool for automatic tool). As a result, the safety of the worker can be ensured and damage to a fixture can be prevented.

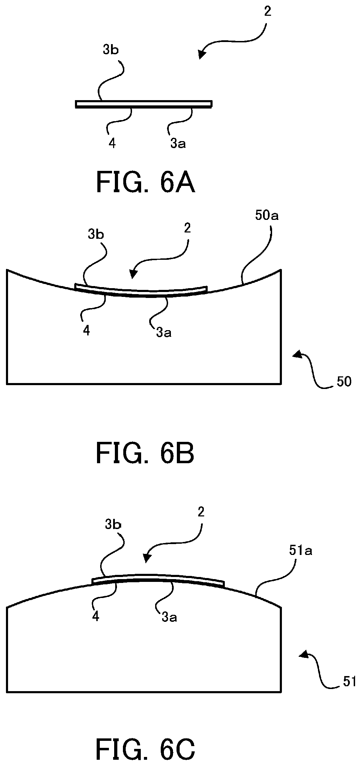

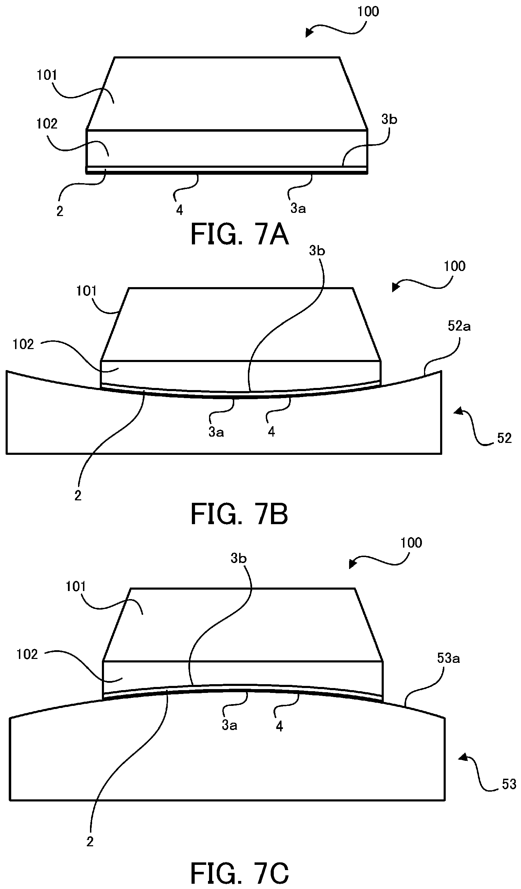

Note that as described later, the sheet metal file according to the present embodiment includes the cutting edges 4 raised on the surface of the main body 3 by setting and is able to smooth a workpiece with the main body 3 bent along the curved surface of the workpiece. Therefore, when a convex surface of a workpiece is smoothed in particular, the side of a smoothing surface (setting surface 3a) of the sheet metal file is to bend in a concave shape along the convex surface of the workpiece. On the other hand, the side of the back surface 3b, which is the surface opposite the smoothing surface (setting surface 3a), is to bend in a convex shape (see FIGS. 6C and 7C). If cutting edges are raised on the back surface 3b in the same manner as the smoothing surface (setting surface 3a), there is a risk of damaging the tool or the hand holding the sheet metal file because the back surface 3b is bent in a convex shape and then the cutting edges raised on the back surface 3b by setting open (stand). Therefore, in the sheet metal file according to the present embodiment, the cutting edges 4 are raised only on the surface (setting surface 3a), on the first side, of the main body 3, while no cutting edges 4 are formed on the surface (back surface 3b), on the second side, of the main body 3.

FIG. 2A is a plan view illustrating the sheet metal file 2 according to the present embodiment. The sheet metal file 2 illustrated in FIG. 2 is cut out of the large sheet metal file 1 illustrated in FIGS. 1A to 1C to have a desired size according to the smoothing application, the smoothing location, the attached destination of the thin plate file 2 itself, and the like. As illustrated in FIG. 2A, the sheet metal file 2 according to the present embodiment is cut out so that the entire surface of the setting surface 3a becomes a setting region 5.

As illustrated in FIGS. 2A to 2C, the size of a main body 3 of the sheet metal file 2 is s1 mm (50 mm) in length × t1 mm (100 mm) in width × u mm (0.5 mm) in thickness. The sheet metal plate file 2 cut out of the sheet metal file 1 is an elastic member that is flexible, and can be easy to smooth a flat or curved surface that is a surface to be smoothed of a workpiece. Note that it is necessary to form the sheet metal file 2 at an appropriate size such that it has flexibility that is sufficient to smooth a curved surface because the smaller the size, the less flexible.

Note that although the sheet metal file according to the present embodiment is rectangular in shape in a plan view and the size is s1 mm (50 mm) in length × t1 mm (100 mm) in width × u mm in thickness (0.5 mm), the present disclosure is not limited to such a shape and size. The formed sheet metal file 2 may have flexibility and elasticity to the extent that a curved surface of a workpiece can be smoothed. The shape may be any shape such as a round shape, a triangular shape, a square shape, a wave shape, or a combination thereof. The size may be any size as long as the formed sheet metal file 2 has flexibility and elasticity enough to smooth a curved surface of a workpiece. The thickness of the main body is preferably 1.0 mm or less in order to exhibit appropriate flexibility and elasticity.

FIG. 2B is a front view illustrating the sheet metal file 2 according to the present embodiment. The setting surface 3a on which the cutting edges 4 are raised by setting is on the upper side of the sheet surface in FIG. 2B. A back surface 3b on which no cutting edges are formed is on the lower side of the sheet surface. FIG. 2C is a bottom view illustrating the sheet metal file 2 according to the present embodiment. The surface illustrated in FIG. 2C is a surface (back surface 3b) opposite the surface illustrated in FIG. 2A, and is a non-setting region 6.

As described above, the back surface 3b of the main body in the sheet metal file 2 illustrated in FIG. 2C serves as a holding section that allows a worker to hold the sheet metal file 2 in the worker's hand, or an attachment section that allows the sheet metal file 2 to be embedded in a smoothing tool (manual tool, automatic tool or tool for automatic tool).

On the setting region 5 illustrated in FIGS.1A and 2A, the cutting edges 4 (4a, 4b, 4c) are raised by setting in three different directions. The cutting edges 4 are formed in the order of cutting edges 4a, cutting edges 4b and cutting edges 4c by setting, namely driving a chisel to a predetermined depth on the surface of the main body 3. Hereinafter, the cutting edges 4a, the cutting edges 4b, and the cutting edges 4c are also referred to as "lower cutting edges 1", "lower cutting edges 2", and "upper cutting edges", respectively. Next, setting in each of the three sets of cutting edges 4a, 4b, and 4c formed by setting on the setting region 5 will be described.

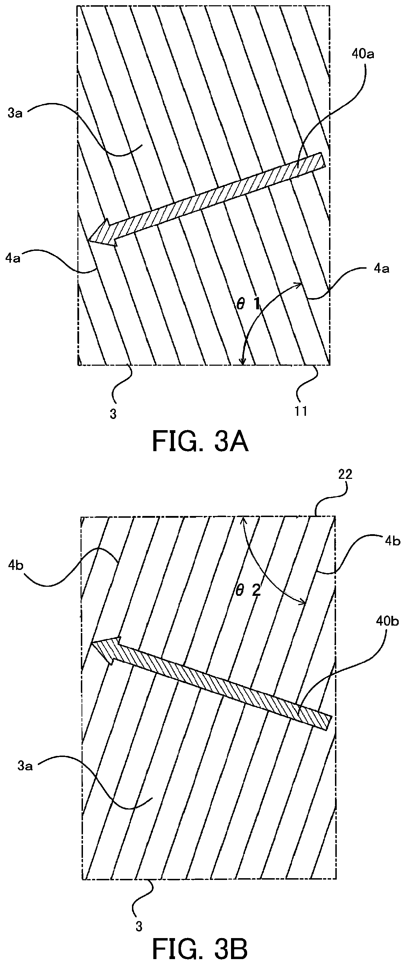

FIG. 3A is an explanatory diagram of the cutting edges 4a (lower cutting edges 1). On the setting region 5 in the setting surface 3a of the main body 3, the cutting edges 4a are formed in parallel at equal intervals by setting, namely driving a chisel having a wide blade to a predetermined depth. Assuming that a lower side of the main body 3 in FIG. 1A is a reference line 11, an angle formed by the cutting edges 4a and the reference line 11 is θ1. The arrow 40a represents a setting or driving direction (approaching direction of the chisel) at the time of forming the cutting edges 4a. In FIG. 3A, the driving is performed from the upper right of the sheet surface toward the lower left of the sheet surface. The cutting edges 4a are formed in parallel at equal intervals by driving the chisel at the same driving angle θ4.

FIG. 3B is an explanatory diagram of the cutting edges 4b (lower cutting edges 2). On the setting region 5 in the setting surface 3a of the main body 3, the cutting edges 4b are formed in parallel at equal intervals by setting, namely driving the chisel having the wide blade to the predetermined depth. Assuming that an upper side of the main body 3 in FIG. 1A is a reference line 22, an angle formed by the cutting edges 4b and the reference line 22 is θ2. The arrow 40b represents a setting or driving direction (approaching direction of the chisel) at the time of forming the cutting edges 4b. In FIG. 3B, the driving is performed from the lower right of the sheet surface toward the upper left of the sheet surface. The upper side (reference line 22) and the lower side (reference line 11) of the main body 3 in FIG. 1A are substantially parallel to each other. In the present embodiment, the angle θ1 and the angle θ2 are substantially the same. The cutting edges 4b are formed in parallel at equal intervals by driving the chisel at the same driving angle θ4.

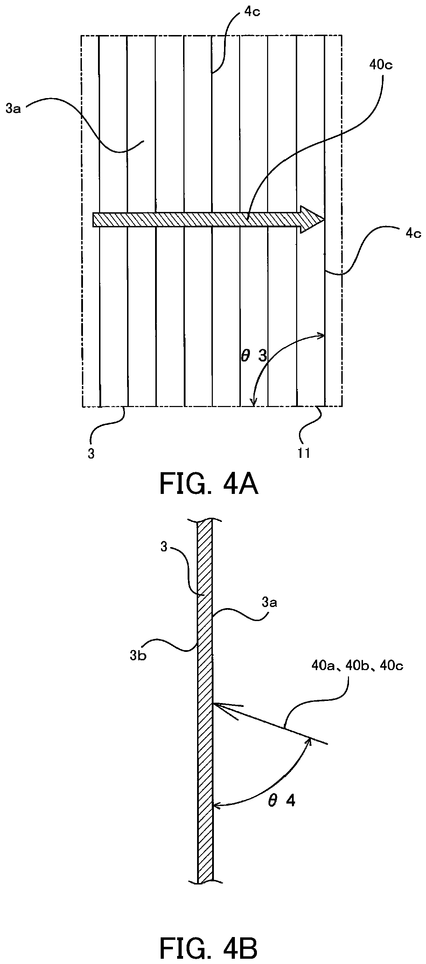

FIG. 4A is an explanatory diagram of the cutting edges 4c (upper cutting edges). On the setting region 5 in the setting surface 3a of the main body 3, the cutting edges 4c are formed in parallel at equal intervals by setting, namely driving the chisel having the wide blade to the predetermined depth. Assuming that the lower side of the main body 3 in FIG. 4A is a reference line 11, an angle formed by the cutting edges 4c and the reference line 11 is θ3. The arrow 40c represents a setting or driving direction (approaching direction of the chisel) at the time of forming the cutting edges 4c. In FIG. 4A, the driving is performed from the left side of the sheet surface toward the right side of the sheet surface. The cutting edges 4c are formed in parallel at equal intervals by driving the chisel at the same driving angle θ4.

In the present embodiment, the cutting edges 4a, 4b, and 4c are all formed in parallel at equal intervals. The cutting edges 4a, 4b, and 4c are also formed at predetermined pitches.

FIG. 4B is a diagram illustrating a setting or driving angle θ4. The arrows 40a, 40b, and 40c represent the setting or driving direction (the approaching direction of the chisel) at the time of forming the cutting edges 4a, 4b, and 4c, respectively. The angle formed by the setting surface 3a of the main body 3 and each of the arrows 40a, 40b, 40c is θ4. In FIG. 4B, the driving is performed from the lower right of the sheet surface toward the upper left of the sheet surface.

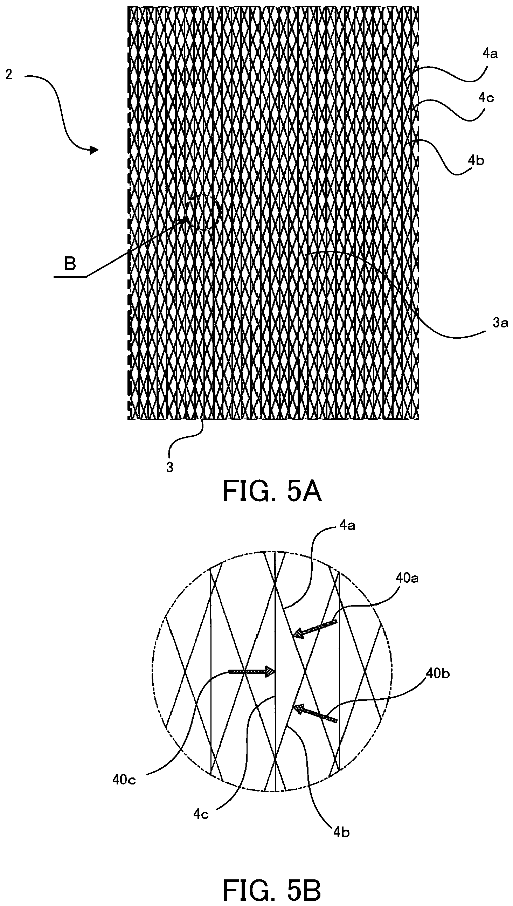

FIG. 5A is an enlarged view of part A in FIG. 2A. As illustrated in FIG. 5A, the cutting edges 4a, 4b, and 4c are formed by setting in three different directions evenly over the entire setting region 5 in the setting surface 3a of the sheet metal file 1 (sheet metal file 2).

FIG. 5B is an enlarged view of part B in FIG. 5A. As illustrated in FIG. 5B, the setting or driving directions 40a, 40b, and 40c of the cutting edges 4a, 4b, and 4c in three different directions face each other in the three directions. That is, the formation directions (i.e., the direction of the cutting edges, the cutting direction, and the smoothing direction) of the cutting edges 4a, 4b, and 4c are not biased in one direction by setting so that the three setting or driving directions (arrows 40a, 40b, 40c) face each other. The cutting edges 4a, 4b, and 4c in the three different directions are formed so that the forming directions (i.e., the direction of the cutting edges, the cutting direction, and the smoothing direction) of the cutting edges 4a, 4b, and 4c face each other.

In the present embodiment, the arrow 40a and the arrow 40b are directed from the right to the left in FIG. 5B, while the arrow 40c is directed from the left to the right. Therefore, in the left-right direction of FIG. 5B, the cutting edges 4c are opposite to the cutting edges 4a and 4b. The cutting edges 4a and 4b are formed at different angles. The smoothing direction at the time of smoothing is not limited. That is, the surface to be smoothed of the workpiece can be smoothed in all directions through smooth operation.

Respective formation pitches of the cutting edges 4a, 4b, and 4c are set so that respective formation angles (θ1, θ2, θ3) of the cutting edges 4a, 4b, and 4c are different, and the intersections of the cutting edges 4a, 4b, and 4c in three different directions are irregularly arranged. That is, in a certain part, an cutting edge 4c passes on the intersection of a cutting edge 4a and a cutting edge 4b, and in the other part, an cutting edge 4c passes through part other than the intersection of a cutting edge 4a and a cutting edge 4b. As a result, the regularity of the cutting edges 4a, 4b, and 4c is reduced, and the deviation of the cutting ability depending on the smoothing direction is reduced.

### [Practical Example]

The sheet metal file 1 (sheet metal file 2) according to the present embodiment described above can be manufactured under the following conditions.

### (Main body)

Material: Stainless
Plate thickness: 0.5 mm

### (Cutting edges 4a: Lower cutting edges 1)

Pitch: 0.65 mm
Angle θ1: 71°
Driving angle θ4: 66°
Driving depth 0.15 mm

### (Cutting edges 4b: Lower cutting edges 2)

Pitch: 0.9 mm
Angle θ2: 71°
Driving angle θ4: 66°
Driving depth 0.15 mm

### (Cutting edges 4c: Upper cutting edges)

Pitch: 0.85 mm
Angle θ3: 90°
Driving angle θ4: 66°
Driving depth 0.15 mm

A sheet metal file 1 (sheet metal file 2) according to the present embodiment includes a main body 3 composed of a sheet metal member that is flexible, and cutting edges 4a, 4b, and 4c, in three different directions, raised on a surface, on a first side, of the main body 3. The setting or driving directions 40a, 40b, and 40c of the cutting edges 4a, 4b, and 4c in the three different directions face each other in the three directions. That is, the setting or driving directions are not biased in one direction. It is therefore possible to smooth a workpiece in all directions instead of smoothing the workpiece in only one direction. The sheet metal file 1 (sheet metal file 2) can be easy to smooth the curved and flat surfaces that are surfaces to be smoothed of a workpiece while rubbing it in all directions through smooth operation. Since the main body 3 and the cutting edges 4 raised by setting on the surface of the main body 3 are made of the same metal member, the sheet metal file 1 has high cutting ability and excellent durability.

When the intersections of the cutting edges 4a, 4b, and 4c in the three different directions are irregularly arranged, the deviation of the cutting ability depending on the smoothing direction becomes smaller. As described above, the sheet metal file 1 (sheet metal file 2) according to the present embodiment can be easy to smooth the curved and flat surfaces that are the surfaces to be smoothed of a workpiece. The sheet metal file 1 (sheet metal file 2) can smooth the workpiece in all directions and has high cutting ability and high durability.

Next, a usage mode (smoothing mode) of the sheet metal file 2 will be described with reference to FIGS. 6A to 7C. FIGS. 6A to 6C illustrate the sheet metal file 2 in usage modes in which the sheet metal file 2 is held directly in hand without being embedded in a smoothing tool or the like. FIG. 6A is a side view (front view) of the sheet metal file 2 before it is used (before smoothing operation). The setting surface 3a on which the cutting edges 4 are raised is on the lower side of the sheet surface. The back surface 3b on which no cutting edges are formed is on the upper side of the sheet surface. The back surface 3b serves as the holding section. The sheet metal file 2 before it is used (before smoothing operation) illustrated in FIG. 6A is flat.

FIG. 6B is a side view of the sheet metal file 2 in a usage mode in which the sheet metal file 2 smooths a workpiece 50 with the setting surface 3a (cutting edges 4) of the sheet metal file 2 bent along a surface to be smoothed, 50a of the workpiece 50. By pressing the sheet metal file 2 from the back surface 3b side against a concave curved surface which is the surface to be smoothed, 50a of the workpiece 50, the entire sheet metal file 2 is bent along the concave curved surface which is the surface to be smoothed, 50a. The entire setting surface 3a (cutting edges 4) of the sheet metal file 2 then comes into contact with the surface to be smoothed, 50a that is the concave curved surface. In this state, the sheet metal file 2 is moved in a desired direction (in all directions such as front, back, left, and right), and can thereby be easy to smooth the surface to be smoothed, 50a of the workpiece 50 through smooth operation.

A metal member constituting a main body 3 of the sheet metal file 2 is an elastic member. Therefore, when the sheet metal file 2 is separated from the surface to be smoothed, 50a of the workpiece 50 after the smoothing operation, the shape of the sheet metal file 2 is restored to its original flat state illustrated in FIG. 6A from a state in which the setting surface 3a side of the sheet metal file 2 is convexly bent as illustrated in FIG. 6B. Note that if the sheet metal file 2, which has elasticity, is used many times or the curved surface of the workpiece is steep, the sheet metal file 2 may not be restored to a completely flat shape although it may be restored to some extent.

FIG. 6C is a side view of the sheet metal file 2 in a usage mode in which the sheet metal file 2 smooths a workpiece 51 with the setting surface 3a (cutting edges 4) side of the sheet metal file 2 pushed along a surface to be smoothed, 51a of the workpiece 51. By pressing the sheet metal file 2 from the back surface 3b side against the convex curved surface which is the surface to be smoothed, 51a of the workpiece 51, the entire sheet metal file 2 is bent along the convex curved surface which is the surface to be smoothed, 51a. The entire setting surface 3a (cutting edges 4) of the sheet metal file 2 comes into contact with the surface to be smoothed, 51a having a convex curved surface. In this state, the sheet metal file 2 is moved in a desired direction (in all directions such as front, back, left, and right), and can thereby be easy to smooth the surface to be smoothed, 51a of the workpiece 51 through smooth operation.

The metal member constituting the main body 3 of the sheet metal file 2 is an elastic member. Therefore, when the sheet metal file 2 is separated from the surface to be smoothed, 51a of the workpiece 51 after the smoothing operation, the shape of the sheet metal file 2 is restored to its original flat state illustrated in FIG. 6A from a state in which the setting surface 3a side of the sheet metal file 2 is concavely bent as illustrated in FIG. 6C. Note that if the sheet metal file 2, which has elasticity, is used many times or the curved surface of the workpiece is steep, the sheet metal file 2 may not be restored to a completely flat shape although it may be restored to some extent.

Although not illustrated, the sheet metal file 2 can be easy to smooth any surface to be smoothed of a workpiece through smooth operation because the sheet metal file 2 is allowed to bend according to a shape of a surface to be smoothed even when curved surfaces having different radii of curvature are formed on the surface to be smoothed of the workpiece, curved surfaces with different radii of curvature are continuously formed, or a curved surface and a plane are continuously formed. In the sheet metal file 2, the main body 3 and the cutting edges 4 raised by setting on the surface of the main body 3 are made of the same metal member. The sheet metal file 2 therefore has high cutting ability and excellent durability.

FIGS. 7A to 7C illustrate a sheet metal file 2 in a usage mode in which the sheet metal file 2 is embedded in a smoothing tool (manual tool) for work. FIG. 7A is a side view (front view) of a file tool 100 before it is used (before smoothing operation). A setting surface 3a of a sheet metal file 2 embedded in the file tool 100 is on the lower side of the sheet surface of the file tool 100, and cutting edges 4 are raised on the setting surface 3a. The surface of the sheet metal file 2 embedded in the file tool 100 before it is used (before smoothing operation) illustrated in FIG. 7A is flat.

As illustrated in FIG. 7A, the file tool 100 includes the sheet metal file 2, a deformable section 102, and a hard section 101 (holding section). Specifically, a back surface 3b of the sheet metal file 2 serves as an attachment surface that allows a tool (smoothing tool, holding section) for smoothing a workpiece to be attached to. The deformable section 102 is box-shaped and attached to the entire attachment surface (back surface 3b) with an adhesive or the like. The hard section 101 has a quadrangular pyramid shape and is attached to the opposite surface of the deformable section 102 with an adhesive or the like.

The deformable section 102 attached to the sheet metal file 2 is made of rubber. When pressure is applied, the deformable section 102 deforms according to the pressure as will be described later. The hard section 101 attached to the deformable section 102 is made of plastic (for example, polycarbonate). For example, the hard section 101 is made of a material that is not easily deformed even when pressure is applied. The hard section 101 serves as a holding section to be held in the hand during smoothing operation. By attaching the holding section to the sheet metal file 2 in this way, the smoothing operation can be easily performed through smooth operation even when the smoothing area is wide.

FIG. 7B is a side view of the file tool 100 in a usage mode in which the file tool 100 smooths a surface to be smoothed, 52a of a workpiece 52 in a state where the setting surface 3a (cutting edges 4) of the sheet metal file 2 embedded in the file tool 100 is pressed along the surface to be smoothed, 52a of the workpiece 52. The sheet metal file 2 embedded in the file tool 100 is pressed from the hard section 101 (back surface 3b) side against a concave curved surface that is a surface to be smoothed, 52a of the workpiece 52. As a result, the entire sheet metal file 2 bends together with the deformable section 102 along the concave curved surface that is the surface to be smoothed, 52a. The entire setting surface 3a (cutting edges 4) of the sheet metal file 2 then comes into contact with the surface to be smoothed, 52a having the concave curved surface. In this state, the file tool 100 with the hard section 101 held is moved in a desired direction (in all directions such as front, back, left, and right), and can thereby be easy to smooth the surface to be smoothed, 52a of the workpiece 52 through smooth operation.

As illustrated in FIG. 7B, the deformable section 102 is deformed in response to the deformation of the sheet metal file 2. On the other hand, the hard section 101 does not deform even when the sheet metal file 2 and the deformable section 102 are deformed. Each of the metal member constituting the main body 3 of the sheet metal file 2 and the deformable section 102 is an elastic member that is flexible. Therefore, when the file tool 100 is separated from the surface to be smoothed, 52a of the workpiece 52 after the smoothing operation, the shape of the file tool 100 (the sheet metal file 2 and the deformable section 102) is restored to its original flat state illustrated in FIG. 7A from a state in which as illustrated in FIG. 7B the setting surface 3a side of the sheet metal file 2 and the deformable section 102 is convexly bent and the deformable section 102 is convexly deformed. Note that if the sheet metal file 2 and the deformable section 102, which have elasticity, are used many times or the curved surface of the workpiece is steep, the sheet metal file 2 and the deformable section 102 may not be restored to a completely flat shape although it may be restored to some extent.

FIG. 7C is a side view of the file tool 100 in a usage mode in which the file tool 100 smooths a surface to be smoothed, 53a of a workpiece 53 with the setting surface 3a (cutting edges 4) of the sheet metal file 2 embedded in the file tool 100 pressed along the surface to be smoothed, 53a of the workpiece 53. The sheet metal file 2 embedded in the file tool 100 is pressed from the hard section 101 (back surface 3b) side against a convex curved surface which is the surface to be smoothed, 53a of the workpiece 53. As a result, the entire sheet metal file 2 bends together with the deformable section 102 along the convex curved surface that is the surface to be smoothed, 53a. The entire setting surface 3a (cutting edges 4) of the sheet metal file 2 comes into contact with the surface to be smoothed, 53a that is the convex curved surface. In this state, the file tool 100 with the hard section 101 held is moved in a desired direction (in all directions such as front, back, left, and right), and can thereby be easy to smooth the surface to be smoothed, 53a of the workpiece 53 through smooth operation.

As illustrated in FIG. 7C, the deformable section 102 is deformed in response to the deformation of the sheet metal file 2. On the other hand, the hard section 101 does not deform even when the sheet metal file 2 and the deformable section 102 are deformed. Each of the metal member constituting the main body 3 of the sheet metal file 2 and the deformable section 102 is an elastic member. Therefore, when the file tool 100 is separated from the surface to be smoothed, 53a of the workpiece 53 after the smoothing operation, the shape of the file tool 100 (the sheet metal file 2 and the deformable section 102) is restored to its original flat state illustrated in FIG. 7A from a state in which as illustrated in FIG. 7C the setting surface 3a side of the sheet metal file 2 and the deformable section 102 is concavely bent and the deformable section 102 is concavely deformed. Note that if the sheet metal file 2 and the deformable section 102, which have elasticity, are used many times or the curved surface of the workpiece is steep, the sheet metal file 2 and the deformable section 102 may not be restored to a completely flat shape although it may be restored to some extent.

Although not illustrated, the sheet metal file 2 embedded in the file tool 100 together with the deformable section 102 can be easy to smooth any surface to be smoothed of a workpiece through smooth operation because the sheet metal file 2 and the deformable section 102 are allowed to bend according to a shape of a surface to be smoothed even when curved surfaces having different radii of curvature are formed on the surface to be smoothed of the workpiece, curved surfaces with different radii of curvature are continuously formed, or a curved surface and a plane are continuously formed. The main body 3 of the sheet metal file 2 embedded in the file tool 100 and the cutting edges 4 formed by setting on the main body 3 are made of the same metal member. The file tool 100 therefore has high cutting ability and excellent durability.

### [Other Aspect]

Although the sheet metal file according to the embodiment of the present disclosure has been described above, the present disclosure is not limited to the above-described embodiment, and various other changes are possible.

For example, respective pitches of the cutting edges 4a, 4b, 4c, the angle with respect to the reference line (θ1, θ2, θ3), the driving angle (θ4), the driving depth, the thickness of the main body, the size of the main body, the shape of the main body, and the like may be changed as appropriate.

Although the cutting edges raised by setting on the setting area 5 are formed in three different directions in the above-described embodiment, the mode of forming the cutting edges is not limited thereto. For example, the cutting edges raised by setting on the setting area 5 may be cutting edges 4a and 4b formed in two different directions. Alternatively, the cutting edges raised by setting on the setting area 5 may be any one set of cutting edges (cutting edges formed in one direction) of the cutting edges 4a, 4b, and 4c. Further, the cutting edges raised by setting on the setting area 5 may be cutting edges formed in four or more different directions.

In the sheet metal file according to the present embodiment, the cutting edges are raised by setting on the main body composed of a flexible sheet metal member (elastic member). Therefore, even the cutting edges formed in one direction, two directions, or four or more directions in this way can be easy to smooth the curved and flat surfaces as the surface to be smoothed of the workpiece, and have high cutting ability and high durability. The cutting edges are raised by driving a chisel into the surface of a flexible sheet metal member, namely by setting. It is therefore possible to improve the flexibility of the main body (setting region).

In the above-described embodiment, the manual file tool 100 (a smoothing tool) is constituted by attaching members to the back surface 3b (the surface on a second side), of the metal thin plate file 2, on which no cutting edges are formed. Here, the members are the deformable section 102 and the hard section 101. The present disclosure is not limited to the embodiment. An automatic tool or a tool for an automatic tool (a tool attached to the automatic tool) may be attached to the back surface 3b (the surface on the second side), of the metal thin plate file 2, on which no cutting edges are formed.

In the above-described embodiment, the aspect in which the sheet metal file 2 is embedded in the smoothing tool while maintaining the flat shape has been described. The present disclosure is not limited to the embodiment. The sheet metal file 2 may be embedded in the smoothing tool in a state of being deformed (bent) into a desired shape (concave, convex, corrugated, annular, etc.) for the purpose of smoothing a curved surface of a specific shape. It is consequently possible to provide a smoothing tool (manual tool, automatic tool or tool for automatic tool) specialized for smoothing a curved surface of a specific shape.

In the above-described embodiment, the entire surface of the setting surface 3a of the sheet metal file 2 is cut out so as to be the setting region 5. The present disclosure is not limited to the aspect. A non-setting region 6 may be provided in part of the setting surface 3a.

In the present embodiment, the cutting edges 4a, 4b, and 4c are formed at different pitches so that the intersections of the cutting edges 4a, 4b, and 4c are arranged irregularly. However, the pitches of the cutting edges 4a, 4b, and 4c may be the same, or some of them may have the same pitch and the others may have different pitches. It is preferable that the intersections of the cutting edges 4a, 4b, and 4c be irregularly arranged as described above.

In the present embodiment, the driving depths of the cutting edges 4a, 4b, and 4c are all the same. Further, in order to maintain the flexibility and elasticity of the main body of the sheet metal file 2 in the smoothing operation, and to maintain the cutting ability and durability, the driving depth of the cutting edges is preferably in the range of 20 to 40% of the thickness (u) of the main body.

## Claims

1. A sheet metal file comprising:
a main body (3) composed of a sheet metal member that is flexible; and
cutting edges (4) raised by setting on a surface, on a first side, of the main body,
the sheet metal file being allowed to smooth an object to be smoothed, wherein
the main body is an elastic member,
the cutting edges are formed so that a driving depth with respect to the main body is in a range of 20 to 40% of a thickness of the main body, and
the sheet metal file is allowed to smooth the object to be smoothed with the surface (3a) of the main body on which the cutting edges are raised facing a curved surface of the object to be smoothed and with the main body bent along the curved surface.

2. The sheet metal file according to claim 1, wherein a surface (3b), on a second side, of the main body serves as a holding section that is allowed to be held in a hand when smoothing the object to be smoothed, no cutting edges being formed on the surface, on the second side, of the main body.

3. The sheet metal file according to claim 1 or 2, wherein a surface (3b), on a second side, of the main body serves as a holding section (101) or an attachment section, on which no cutting edges are formed, wherein
the holding section is allowed to be held in a hand when smoothing the object to be smoothed, and
the attachment section allows members to be attached to, the members being included in a smoothing tool to be employed when smoothing the object to be smoothed.
